# EUROPEAN PATENT APPLICATION

(11) **EP 2 883 683 A1**
(43) Date of publication of application: **17.06.2015**
(21) Application number: 13382515.8
(22) Date of filing: 16.12.2013
(51) Int. Cl.: B29C 55/02, B32B 27/32

(54) **Pre-Stretched Packaging Film**

(71) Applicant: Dow Global Technologies LLC, Midland, MI 48674 (US)
(72) Inventor: MANRIQUE, Antonio, 43007 Tarragona (ES); DEN DOELDER, Cornelis F., 4533HD Terneuzen (NL)
(74) Representative: Elzaburu S.L.P.

(57) **Abstract**

A method for preparing a pre-stretched film includes extruding a multi-layered film that has an initial overall film thickness of 24 µm to 35 µm and stretching the multi-layered film from the initial film thickness to a final film thickness of less than 12 µm to form a pre-stretched film. The multi-layered film has a first layer that includes an ultra low density polyethylene having a density less than 0.910 g/cm³ and has second and third layers that each independently includes a linear low density polyethylene having a density of 0.910 g/cm³ to 0.94 g/cm³. The pre-stretched film is capable of exhibiting an ultimate stretch of less than 28% at an applied weight of 45 kg and less based on a percent change in thickness of the pre-stretched film prior to application of the applied weight compared to after application of the applied weight.

## Description

### Field

Embodiments relate to a pre-stretched film that includes an ultra low density polyethylene and a linear low density polyethylene and a method of manufacturing the pre-stretched film.

### Introduction

A load, such as a group of boxes stacked on a pallet, may be wrapped with a plastic-based outer packaging material for cohesion during transport, handling, and storage. The outer packaging material may be a stretch film that is stretched at the time of application to the load, or a pre-stretched film that is dominantly stretched prior to the time of application to the load. For example, as discussed in European Patent Application No. EP 0779145, the outer packaging material may be a pre-stretched polyethylene film that is stored on a reel or a spool prior to use.

The polyethylene film based stretch films may have multiple layers such as at least one layer including interpolymer resin particles and a linear low density polyethylene (LLDPE), e.g., as discussed in U.S. Patent Publication No. 2012/0219814. Whereas, in U.S. Patent Publication No. 2012/0219814, LLDPE refers to a polyethylene with short branches resulting from copolymerization of ethylene with at least one C₃ to C₁₂ α-olefin comonomer. As discussed in U.S. Patent Publication No. 2012/0219814, by the inclusion of the interpolymer resin particles, a final polyethylene based stretch film demonstrates a decreased rate of ultimate failure. Further, U.S. Patent Publication No. 2012/0219814 teaches that the final film having the interpolymer resin particles has an overall thickness of 12.5 µm to 63.5 µm. However, there is an increasing demand for thinner pre-stretched films, e.g., that have a final thickness of less than 12 µm, which still provide cohesion during transport, handling, and storage (e.g., by avoiding and/or minimizing stretching of the pre-stretched film during and after application to the load). Accordingly, pre-stretched films that have a reduced film thickness without reduced performance are sought.

### Summary

Embodiments may be realized by providing a method for preparing a pre-stretched film that includes extruding a multi-layered film that has an initial overall film thickness of 24 µm to 35 µm, the multi-layered film including a first layer that includes an ultra low density polyethylene having a density less than 0.910 g/cm³, and a second layer and a third layer that each independently include a linear low density polyethylene having a density of 0.910 g/cm³ to 0.94 g/cm³, and stretching the multi-layered film from the initial film thickness to a final film thickness of less than 12 µm to form a pre-stretched film, the pre-stretched film being capable of exhibiting an ultimate stretch of less than 28% at an applied weight of 45 kg and less based on a percent change in thickness of the pre-stretched film prior to application of the applied weight compared to after application of the applied weight.

### Brief Description of the Drawings

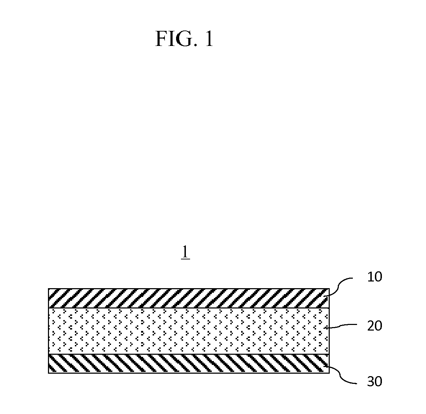

FIG. 1 illustrates a pre-stretched film, according to an exemplary embodiment.

### Detailed Description

A film that is stretched during a manufacturing process that occurs after the film is formed using an extrusion process and before the film is applied to a load, is referred to as a pre-stretched film. The pre-stretched film is dominantly stretched prior to the time of application to the load, e.g., at least 70% of a total overall ultimate stretching of the pre-stretched film occurs prior to application to the load and after a film of an initial thickness is formed using an extrusion process. For example, at least 70% of an ultimate stretch of the film occurs during a separate stretching process that is performed after the film of an initial thickness is formed and before the film is applied to a load. In the separate stretching process, the pre-stretched film is stretched from an initial film thickness to a final film thickness, e.g., prior to being stored on a roll for later application to the load.

The pre-stretched film may be stretched in an on-line process (e.g., a stretching unit is connected with an extrusion unit used to make the film that forms the pre-stretched film such that a stretching process is connected with an extrusion process), or an off-line process (e.g., the stretching process is not connected with the extrusion process) prior to the application to the load. The pre-stretched film may be a machine grade pre-stretched film or a hand wrap pre-stretched film. According to exemplary embodiments, the pre-stretched film is a hand wrap pre-stretch film that is applied by a user with a hand stretch film apparatus to a load.

According to embodiments, the pre-stretched film has a multilayered structure in which resin based layers (e.g., at least three resin based layers) are stacked to form a film having an initial film thickness that is from 24 µm to 35 µm (e.g., 24 µm to 35 µm, 24 µm to 31 µm, 28 µm to 31 µm, etc.), which film having the initial film thickness is thereafter subjected to a stretching process to form the pre-stretched film. After the stretching process that occurs prior to application to the load, the pre-stretched film has a final film thickness that is less than 12 µm (e.g., less than 10 µm, less than 9 µm, etc.). For example, the final film thickness may be from 7 µm to 11 µm (e.g., 7 µm to 9 µm, etc.). Accordingly, a final film having a thickness less than 12 µm is applied to the load.

According to embodiments, at least 70% (e.g., from 72% to 100%) of a total overall ultimate stretching of the pre-stretched film occurs prior to application to the load and after a film of an initial thickness is formed using an extrusion process. The pre-stretched film may be further stretched during the application to the load and/or during transport of the load, but excessive ultimate stretching will reduce the performance of the pre-stretched film (e.g., may result in poor cohesion during transport, handling, and storage). Therefore, minimization and/or reduction in the amount of ultimate stretching during and after application of the pre-stretched film to the load is sought. According to embodiments, the further stretching percentage (i.e., ultimate stretch that can occur while the film still remains intact so as to be usable as a packaging film) of the pre-stretched film is less than 28% at an applied weight of 45 kg and less, based on a percent change in thickness of the pre-stretched film prior to application of the applied weight compared to after application of the applied weight as a force on the pre-stretched film. As such, an applied weight of 45 kg further stretches the pre-stretched film less than 28%, which demonstrates a higher deformation resistance compared to a film that stretches 30% as a result of an applied weight of 45 kg.

The deformation resistance and the stretch percentage of the pre-stretched film is measurable using commercial stretching equipment known in the field, on which equipment the pre-stretched films are stretched at room temperature using a predetermined amount of weight (e.g., the equipment may include 2 to 3 rollers very close to each other to minimize and/or reduce a film neck-in affect). For example, a highlight stretch tester may have a configuration of a film mandrel and a film take-up mandrel positioned with two rollers therebetween, via which rollers the film undergoes stretching. In particular, the rollers apply a predetermined amount of weight on the film, which causes further stretching of the film. The highlight stretch tester measures the force needed to stretch/deform the film and/or an amount of stretched/deformation that is realized when a predetermined amount of force is applied to the film. The resultant stretched/deformed film is intact, e.g., not torn or broken, so as to be useable as a packaging film.

According to exemplary embodiments, the pre-stretched film may be capable of exhibiting a deformation resistance as a function of weight used for realizing a predetermined 25% stretch (based on a change in initial film thickness of the sample compared to a 25% deformed film thickness) that is greater than 45 kg (e.g., from 46 kg to 100 kg, from 47 kg to 70 kg, from 48 kg to 60 kg, etc.). With respect to percent strength based on a predetermined weight, at an applied weight of 45 kg, the pre-stretched film exhibits less than 28% stretching (e.g., 0% to 28%, 0.1% to 27%, 1% to 25%, etc.), based on the percent change in thickness of the pre-stretched film prior to application of the 45 kg weight and after application of the 45 kg weight. At an applied weight of 40 kg, the pre-stretched film may exhibit less than 21% stretching (e.g., 0% to 21 %, 0.1 % to 20%, etc.), based on the percent change in thickness of the pre-stretched film prior to application of the 40 kg weight and after application of the 40 kg weight. At an applied weight of 35 kg, the pre-stretched film may exhibit less than 17% stretching (e.g., 0% to 17%, 0.1 % to 16%, etc.), based on the percent change in thickness of the pre-stretched film prior to application of the 35 kg weight and after application of the 35 kg weight. At an applied weight of 30 kg, the pre-stretched film may exhibit less than 16% stretching (e.g., 0% to 16%, 0.1% to 15%, etc.), based on the percent change in thickness of the pre-stretched film prior to application of the 30 kg weight and after application of the 30 kg weight.

The pre-stretched film may be capable of exhibiting an elasticity modulus, as determined according to applied stress, that is greater than 250 MPa, as measured according to ISO 527-3. For example, the pre-stretched film may have a 100 % modulus, 200 % modulus, and a Young modulus that are each independently greater than 250 MPa (e.g., from 260 MPa to 500 MPa, from 270 MPa to 450 MPa, from 280 MPa to 360 MPa, from 300 MPa to 400 MPa, from 310 MPa to 360 MPa, etc.). The pre-stretched film may be capable of exhibiting a ratio of average Elmendorf Tear CD (g) to average Elmendorf Tear MD (g) that is from 0.01 to 2.10

(e.g., 0.01 to 2.08, 0.01 to 1.75, 0.50 to 1.50, 0.80 to 1.20, 0.80 to 2.08, etc.). Whereas, Elmendorf Tear CD and Elmendorf Tear MD are measured according to ASTM D-1922.

The pre-stretched film may be capable of exhibiting a ratio of puncture elongation in millimeters to puncture force in Newtons that is less than 2.0 (e.g., from 0.1 to 1.95, from 0.5 to 1.75, from 1.0 to 1.65, from 1.25 to 1.65, etc.). Whereas puncture elongation and puncture force are measured according to ASTM D5748-95. According to exemplary embodiments, the pre-stretched film may have both a puncture elongation and a puncture force that is maximized such that a ratio of the puncture elongation to the puncture force is minimized.

The multilayered structure of the pre-stretched film includes more than one polyethylene based layer, which is at least partially derived from ethylene monomers. The polyethylene based layer includes a polyethylene homopolymer and/or a polyethylene derived copolymer (i.e., units derived from two or more monomers of which at least one is polyethylene).

According to embodiments, the pre-stretched film includes at least two polyethylene based layers that each independently includes at least one linear low density polyethylene (LLDPE) resin (which encompasses substantially linear low density resins sometimes referred to as m-LLDPE). The LLDPE resins of the pre-stretched film have a density from 0.910 g/cm³ to 0.94 g/cm³, as measured according ASTM D792. For example, the density of the LLDPE resins may be from 0.910 g/cm³ to 0.925 g/cm³ (e.g., 0.915 g/cm³ to 0.920 g/cm³, 0.916 g/cm³ to 0.919 g/cm³, 0.915 g/cm³ to 0.918 g/cm³, 0.916 g/cm³ to 0.918 g/cm³, etc.) as measured according ASTM D792.

The LLDPE resins include a polyethylene with short branches resulting from copolymerization of ethylene with at least one short chain C₃ to C₁₂ α-olefin co-monomer (such as butene, hexene, or octene). According to exemplary embodiments, the LLDPE resins include only high α-olefin (e.g., C₆ to C₁₂, or C₆ to C₈) short chains. LLDPE encompasses resins made using, e.g., Ziegler-Natta based catalyst systems and single-site based catalyst systems such as metallocenes. The LLDPE resins may include substantially linear ethylene polymers, homogeneously branched linear ethylene polymer, heterogeneously branched ethylene polymers, and/or blends thereof. The LLDPE resins may be made by any polymerization process known to one in the art, e.g., using a particle making polymerization process and/or a solution-phase polymerization process. The LLDPE resins may be made by using a reactor and reactor configuration that is known in the art. The LLDPE resins may have a melt flow rate from 0.3 dg/min to 10 dg/min (e.g., 0.5 to 5.0 dg/min, 1.0 to 5.0 dg/min, etc.) as measured according to ASTM D1238 (190°C, 21.6 kg). Suitable LLDPE resins include, e.g., DOWLEX™ 2045, 2106, 2107, and 2108 (available from The Dow Chemical Company), ELITE™ 5230 (available from The Dow Chemical Company), and EXCEED™ 3518 (available from ExxonMobil Chemical).

Further, the multilayered structure of the pre-stretched film includes at least one other polyethylene based layer that includes at least one ultra low density polyethylene (ULDPE) resin. ULDPE resins have a density of less than 0.910 g/cm³ (e.g., from 0.880 g/cm³ to 0.909 g/cm³, from 0.890 g/cm³ to 0.908 g/cm³, from 0.895 g/cm³ to 0.907 g/cm³, from 0.900 g/cm³ to 0.906 g/cm³, from 0.903 g/cm³ to 0.905 g/cm³, is approximately 0.904 g/cm³, etc.), as measured according ASTM D792. In the embodiments, the ULDPE resins have densities less than the LLDPE resins, i.e., have densities less than 0.910 g/cm³, as measured according ASTM D792. The ULDPE resins may have a density greater than or equal to 0.880 g/cm³ (e.g., 0.905 g/cm³ to 0.880 g/cm³), as measured according ASTM D792. The ULDPE resins include a polyethylene with high levels of short chain branching and may be a substantially linear polymer. The ULDPE resins may be made by any polymerization process known to one in the art. For example, the ULDPE resins may be produced by copolymerization of ethylene with short chain C₃ to C₁₂ α-olefin comonomer (e.g., butene, hexene, or octene). According to an exemplary embodiment, the ULDPE resins may be produced using Ziegler-Natta based catalyst systems. The ULDPE resins may have a melt flow rate from 3.0 dg/min to 4.0 dg/min, as measured according to ASTM D1238 (190°C, 21.6 kg). Suitable ULDPE resins include, e.g., ATTANE™ 4607, 4201, and 4202 (available from The Dow Chemical Company).

According to an exemplary embodiment, a first layer of the pre-stretched film includes (e.g., consists essentially of) one ULDPE resin, a second layer that is a core layer of the pre-stretched film includes (e.g., consists essentially of) one LLDPE resin, and a third layer that is on the second layer includes (e.g., consists essentially of) one LLDPE resin. The LLDPE resin of the third layer may be different from or the same as the LLDPE of the second layer. The first layer, the second layer, and the third layer may be sequentially arranged in the pre-stretched film.

According to exemplary embodiments, the pre-stretched film may include, in addition to the LLDPE resins and the ULDPE resins, at least one other type of polyethylene based resin such as a very low density polyethylene (VLDPE) resin, a low density polyethylene (LDPE) resin, a single site catalyzed linear low density polyethylene resin, and/or a high density polyethylene (HDPE) resin. These polyethylene materials are known in the art, e.g., LLDPE resins contain less long chain branching than LDPE resins. HDPE resins have densities greater than LLDPE resins, i.e., greater than 0.940 g/cm³ (and less than 1.0 g/cm³). The at least one other polyethylene based resin may be incorporated into an additional optional layer of the multilayered structure of the pre-stretched film, e.g., the pre-stretched film may include a fourth layer. The at least one other polyethylene based resin may be combined with the ULDPE and/or LLDPE resins, e.g., at least one of the first, second, and third layers of the pre-stretched film may include the other polyethylene based resin.

The polymerization for forming the polyethylene resin, e.g., the LLDPE and ULDPE resins, may occur by a steady-state polymerization process. For example, processes for copolymerization of monomers that are known in the art may be used. The copolymerization process may be conducted by introducing monomer or monomers into a stirred and/or fluidized bed of resin particles and catalyst.

According to an exemplary embodiment, as shown in FIG. 1, a pre-stretched film 1 has a multilayered structure. For example, the pre-stretched film 1 may include a first layer 10, a second layer 20, and a third layer 30. The first layer 10 may be a polyethylene layer that includes a ULDPE resin. For example, the first layer 10 may be a cling layer for pre-stretched film 1. The second layer 20 may be a polyethylene layer that includes a LLDPE resin, which is different from the ULDPE resin of the first layer 10. For example, the second layer 20 may be a core layer for the pre-stretched film 1. The third layer 30 may be a polyethylene layer that includes a LLDPE resin that is the same or is different from the LLDPE resin of the second layer 20. The third layer 30 may be an outer layer for the pre-stretched film 1. Each of the first layer 10, the second layer 20, and the third layer 30 may independently include an optional additive component that includes at least one additive selected from the group of a cling agent (such as a tackifier), an anti-cling agent, a wax, a functionalized polymer (such as an acid modified polyolefin and/or an anhydride modified polyolefin), an oxidized polyolefin, an antioxidant, a diluent, an oil, a lubricant, a viscosity modifier, a compatabilizer, a filler material, an adjuvant, an adhesion promoter, a plasticizer, a low molecular weight polymer, a blocking agent, an anti-blocking agent, an anti-static agent, an anti-fogging agent, a release agent, a colorant, a dye, a pigment, a processing aid, an UV stabilizer, a heat stabilizer, an impact modifier, a flame retardant, a neutralizer, a surfactant, a nucleating agent, a flexibilizer, a slip agent, a softening agent, a zinc oxide, a rubber, an optical brightener, and a biodegradation enhancer. Each of the layers of the pre-stretched stretch film may substantially exclude any particulate additives such as interpolymer resin particles (such as a styrenic polymer intercalated within a polyolefin). The amount of the additive component may be less than 10 wt% of a total weight of the layer.

When the multilayered pre-stretched film includes at least three layers, the first layer may account for 5 % to 25 % (e.g., 10 % to 20 %, 12 % to 17 %, etc.) of a total thickness of the pre-stretched film. The second layer may account for 50 to 90 % (e.g., 55 % to 85 %, 60 % to 75 %, 68 % to 72 %, etc.) of a total thickness of the pre-stretched film. The third layer may account for 5 % to 25 % (e.g., 10 % to 20 %, 12 % to 17 %, etc.) of a total thickness of the pre-stretched film. The third layer may have a same thickness as the first layer. Embodiments are not limited to a three-layer structure (e.g., the pre-stretched film may include from 3 layers to 100 layers). For example, the pre-stretched film may include at least one additional stiffening layer and/or shrink layer. The additional layer may impart a functionality such as that of a barrier layer and/or a tie layer, as is known in the art.

The production of the pre-stretched film includes at least two process stages. The first stage is the extrusion of a film, e.g., using one of a cast or blown co-extrusion process, to form a film having an initial thickness. The second stage is a stretching process, e.g., a cold stretching process, that reduces the thickness of the extruded film from the initial thickness to form a pre-stretched film having a final thickness. Cast extrusion process refers to an extrusion technique where a polymer melt from the extruder is fed into a wide flat die. The polymer melt comes out of the die as a thin film, which is cast directly into a quench tank or onto a chill roll. A nip roll arrangement then pulls the film, which is later wound into rolls. The blown extrusion process refers to an extrusion technique where a polymer melt exits through a die (which may be an upright cylinder with a circular opening). In the blown film technique, the molten polymer is pulled upwards from the die by a pair of nip rolls above the die to form a film. At least part of the film for forming the pre-stretched film may be formed by a co-extrusion process, which includes melting of at least two separate polymer compositions and their simultaneous extrusion and combination.

After the film for forming the pre-stretched film may be formed by an extrusion process, the film may be stretched in a cold stretch process (e.g., a cold stretch process that is known in the art). In the cold stretch process, the film may be cooled using a chill roll (e.g., using a chill roll having a temperature of 18 °C), then the film may be oriented (e.g., in the machine and/or transverse direction) and relaxed to obtain a pre-stretched film having a reduced thickness. For example, the initial extruded films may be stretched in the machine direction using a machine direction orientation stretching process or an incremental stretching process known in the art. After the film has been stretched to form the pre-stretched film, the pre-stretched film may be mechanically wound onto a roll. The pre-stretched film is dominantly stretched prior to the time of application to the load. For example, at least 70% of a total overall stretching of the pre-stretched film occurs prior to application to the load (e.g., applied from the roll on which the pre-stretched film is wound to the load) and after the film of the initial thickness is formed using the extrusion process.

The roll of the pre-stretched film may be applied to the load using a packaging material dispenser, e.g., a hand wrap device, to form a stretch wrap packaging material that surrounds the load. The pre-stretched film may be applied to the load by securing a leading end of the packaging material to the load or turntable clamp, dispensing the pre-stretched film by providing relative rotation between the load, and severing the pre-stretched film to separate the load from the packaging material dispenser. The relative rotation between the load and the dispenser may be provided by, e.g., manually rotating the packaging material dispenser around a stationary load. The machinery used to wrap the load with the pre-stretched film may be fully automatic or semi-automatic. For example, the load may be wrapped with the pre-stretched film using an apparatus such as one of the various methods discussed in, e.g., International Publication No. WO 2011/091258 and European Patent Application No. 0 779 145.

### Examples

All film samples are fabricated as cast film samples made in a three-layer co-extrusion set-up having the following structure: A/B/B at a thickness ratio of 15 / 70 / 15, based on a total thickness of the film (i.e., each film is a 15% / 70% / 15% film of A/B/B). In particular, for Working Examples 1-5 and the Comparative Examples A-E, the film samples have the following three layer structure: Resin A/ Resin B/ Resin B, with an overall thickness ratio of 15/70/15 (based on a total thickness of the respective film samples). Resin A in the Working Examples 1-5 and the Comparative Examples A-E is ATTANE™ 4607, which is an ultra low density ethylene/octane copolymer that has a density of 0.904 g/cm³ and a melt flow rate of approximately 4 g/10 min, (as measured according to ASTM D1238 at 190° C, 21.6 kg), which is available from The Dow Chemical Company. Resin B is varied in the Working Examples 1-5 and the Comparative Examples A-E, such that each film sample includes one of Resin B.1, Resin B.2, Resin B.3, Resin B.4, or Resin B.5 according to Table 1, below.

**Table 1**

| **Material** | **Melt Flow Rate** (dg/min) | **Density** (g/cc) | **Comonomer** |
|---|---|---|---|
| Resin B.1 | 3.0 | 0.917 | octene |
| Resin B.2 | 3.0 | 0.917 | octene |
| Resin B.3 | 4.0 | 0.916 | octene |
| Resin B.4 | 3.3 | 0.917 | octene |
| Resin B.5 | 2.0 | 0.918 | hexene |

Resin B.3 is ELITE™ 5230G, which is available from The Dow Chemical Company. Resin B.4 is DOWLEX™ 2106G, which is available from The Dow Chemical Company. Resin B.5 is TUFLIN™ HSE 7002, which is available from The Dow Chemical Company. The melt flow rate is determined according to ASTM D1238 (190°C, 21.6 kg).

All film samples are fabricated on a three layer cast film line consisting of three extruders of 70, 55, and 55 mm of diameter, respectively. The films are made in a co-extrusion set-up to have an initial thickness of 30 µm, 23 µm, or 17 µm. The base films are produced under extrusion conditions of 250 m/min, melt temperature of 250 °C, chill roll temperature of 18 °C, and average output of 260 kg/hr. Extruder barrel temperatures are adjusted based on the resin and pumping rates to maintain a constant melt temperature. Air gap is maintained at approximately 3.5 inches for all samples. A vacuum box is used to pin the film to the chill roll. After the co-extruded cast film samples are prepared, the film samples are exposed to a stretching process to form stretched film samples that each have a final orientated film thickness according to Tables 2 and 3, below. In particular, the co-extruded cast films are stretched on commercial equipment, which stretches the cast film samples at room temperature between rolls running at different speeds (normally 2 to 3 rolls very close to each other to minimize film neck-in) to form the stretched film samples. The winding speed in the stretching process is 500 m/min.

Referring to Table 2, below, Working Examples 1-5 each have a pre-orientation film thickness of 30 µm and a final orientated film thickness of 8 µm. The stretched film samples of Working Examples 1-5 are evaluated for Elmendorf tear (CD and MD), percent modulus, Young modulus, ratio of puncture elongation in millimeters to puncture force in Newtons, deformation resistance, and stretch percentage at different forces.

**Table 2**

| | **Working Example 1** | **Working Example 2** | **Working Example 3** | **Working Example 4** | **Working Example 5** |
|---|---|---|---|---|---|
| B Resin | B.1 | B.2 | B.3 | B.4 | B.5 |
| Base film pre-orientation thickness (µm) | 30 | 30 | 30 | 30 | 30 |
| Orientated film thickness (µm) | 8 | 8 | 8 | 8 | 8 |
| Average Elmendorf Tear CD (g) | 151 | 126 | 251 | 127 | 126 |
| Average Elmendorf Tear MD (g) | 132 | 129 | 121 | 130 | 106 |
| 100 % Modulus (MPa) | 348 | 342 | 317 | 321 | 280 |
| 200 % Modulus (Mpa) | 339 | 330 | 310 | 316 | 280 |
| Young Modulus (Mpa) | 353 | 353 | 324 | 325 | 274 |
| Ratio Puncture Elongation (mm) to Puncture Force (N) | 1.5 | 1.5 | 1.9 | 1.6 | 1.5 |
| Deformation Resistance (kg) @ 25% stretch | 49 | 50 | 48 | 49 | 48 |
| Stretch percent (%) @ Stretch Force (kg) | 23 @ 46 | 24 @ 50 | 27 @ 48 | 26 @ 50 | 27 @ 48 |
| | 18 @ 37 | 19 @ 40 | 20 @ 38 | 21 @ 39 | 21 @ 38 |
| | 15 @ 32 | 16 @ 35 | 17 @ 33 | 17 @ 34 | 18 @ 33 |
| | 13 @ 29 | 14 @ 31 | 14 @ 30 | 14 @ 30 | 15 @ 30 |

Referring to Table 2, above, for Working Examples 1-5, a ratio of Average Elmendorf Tear CD to Average Elmendorf Tear MD is 1.14, 0.98, 2.07, 0.97, and 1.19, respectively.

Referring to Table 3, below, each of Comparative Examples A-E has a pre-orientation film thickness of 23 µm or 17 µm and a final orientated film thickness of 7 µm or 8 µm. The stretched film samples of Comparative Examples A-E are evaluated for Elmendorf tear, percent modules, ratio of puncture elongation in millimeters to puncture force in Newtons, and stretch percentage.

**Table 3**

| | **Comparative Example A** | **Comparative Example B** | **Comparative Example C** | **Comparative Example D** | **Comparative Example E** |
|---|---|---|---|---|---|
| B Resin | B.1 | B.2 | B.3 | B.4 | B.5 |
| Base film pre-orientation thickness (µm) | 17 | 17 | 23 | 23 | 23 |
| Orientated film thickness (µm) | 7 | 8 | 8 | 8 | 8 |
| Average Elmendorf Tear CD (g) | 268 | 308 | 283 | 258 | 312 |
| Average Elmendorf Tear MD (g) | 103 | 134 | 79 | 113 | 116 |
| 100 % Modulus (MPa) | 150 | 132 | 244 | 205 | 187 |
| 200 % Modulus (Mpa) | 148 | 130 | 238 | 199 | 183 |
| Young Modulus (Mpa) | 155 | 135 | 250 | 211 | 194 |
| Ratio Puncture Elongation (mm) to Puncture Force (N) | 3.3 | 3.5 | 2.3 | 2.3 | 2.5 |
| Deformation Resistance (kg) @ 25% stretch | 42 | 35 | 40 | 40 | 45 |
| Stretch percent (%) @ Stretch Force (kg) | 62 @ 42 | 88 @ 44 | 63 @ 48 | 47 @ 42 | 44 @ 45 |
| | 47 @ 35 | 63 @ 35 | 37 @ 36 | 35 @ 34 | 35 @ 36 |
| | 38 @ 28 | 41 @ 28 | 27 @ 28 | 29 @ 30 | 25 @ 28 |

Referring to Table 3, above, for Comparative Examples A-E, a ratio of Average Elmendorf Tear CD to Average Elmendorf Tear MD is 2.60, 2.30, 2.28, and 2.69, respectively.

With respect to Tables 2 and 3, the stretched film samples are evaluated for Elmendorf Tear - CD and Elmendorf Tear - MD according to ASTM D-1922. The 100 % Modulus, 200 % Modulus, and the Young Modulus of the stretched film samples are measured according to ISO 527-3. The stretched film samples are also evaluated for both puncture elongation (mm) and puncture force (N), according to ASTM D5748-95. Then the puncture elongation is divided by the puncture force to determine the ratio of puncture elongation to puncture force. Deformation resistance is measured using the highlight stretch tester, which measures the force needed to stretch the film by 25%.

## Claims

1. A method for preparing a pre-stretched film, the method comprising:
extruding a multi-layered film that has an initial overall film thickness of 24 µm to 35 µm, the multi-layered film including a first layer that includes an ultra low density polyethylene having a density less than 0.910 g/cm³, and a second layer and a third layer that each independently include a linear low density polyethylene having a density of 0.910 g/cm³ to 0.94 g/cm³, and
stretching the multi-layered film from the initial film thickness to a final film thickness of less than 12 µm to form a pre-stretched film, the pre-stretched film being capable of exhibiting an ultimate stretch of less than 28% at an applied weight of 45 kg and less based on a percent change in thickness of the pre-stretched film prior to application of the applied weight compared to after application of the applied weight.

2. The method as claimed in claim 1, wherein the pre-stretched film is capable of exhibiting an elasticity modulus based on stress that is greater than 250 MPa as measured according to ISO 527-3, a ratio of average Elmendorf Tear CD to average Elmendorf tear MD that is from 0.01 to 2.10 as measured according to ASTM D-1922, a ratio of puncture elongation to puncture force that is less than 2.0 as measured according to ASTM D5748-95, and a deformation resistance as a function of weight and a 25% stretch that is at least 45 kg.

3. The method as claimed in claim 2, wherein an elasticity modulus based on stress includes a 100 % modulus, 200 % modulus, and a Young modulus, which are each greater than 250 MPa.

4. The method as claimed in claim 2 or claim 3, wherein the ratio of average Elmendorf Tear CD to average Elmendorf tear MD is from 0.80 to 2.08, the ratio of puncture elongation to puncture force is from 1.25 to 1.65, and the deformation resistance is from 48 kg to 55 kg.

5. The method as claimed in any one of claims 1-4, wherein the pre-stretched film is capable of exhibiting less than 21% stretching at an applied weight of 40 kg, the pre-stretched film is capable of exhibiting less than 17% stretching at an applied weight of 35 kg, and the pre-stretched film is capable of exhibiting less than 16 % stretching at an applied weight of 30 kg.

6. The method as claimed in any one of claims 1-5, wherein the first layer, the second layer, and the third layer are sequentially arranged in the pre-stretched film.

7. The method as claimed in any one of claims 1-6, wherein the density of the linear low density polyethylene in each of the second layer and the third layer is independently from 0.915 g/cm³ to 0.920 g/cm³ and the density of the ultra low density polyethylene in the first layer is from 0.903 g/cm³ to 0.905 g/cm³.

8. The method as claimed in any one of claims 1-7, wherein the multi-layered film consists essentially of the first layer, the second layer, and the third layer.

9. A method of wrapping a load with a pre-stretched stretch film, the method comprising:
loading a pre-stretched stretch film, which is prepared according to the method claimed in any one of claims 1-8, into a packaging material dispenser, and
wrapping the load with the pre-stretched stretch film using the packaging material dispenser, the pre-stretched film wrapped on the load exhibiting the ultimate stretch of less than 28% at an applied weight of 45 kg and less based on the percent change in thickness of the pre-stretched film prior to application of the applied weight compared to after application of the applied weight.

10. A method of wrapping by hand a load with a pre-stretched stretch film, the method comprising:
loading a pre-stretched stretch film, which is prepared according to the method claimed in any one of claims 1-8, into a hand wrap device, and
wrapping the load with the pre-stretched stretch film using the hand wrap device, the pre-stretched film wrapped on the load exhibiting the ultimate stretch of less than 28% at an applied weight of 45 kg and less based on the percent change in thickness of the pre-stretched film prior to application of the applied weight compared to after application of the applied weight.
